(19) Europäisches Patentamt

European Patent Office

Office européen des brevets

(11) **EP 4 697 082 A1**

(12) **EUROPEAN PATENT APPLICATION**
published in accordance with Art. 153(4) EPC

(43) Date of publication:
**18.02.2026 Bulletin 2026/08**

(21) Application number: **24779207.0**

(22) Date of filing: **06.03.2024**

(51) International Patent Classification (IPC):
*G02B 27/02* (2006.01)      *B32B 7/023* (2019.01)
*G02B 1/111* (2015.01)

(52) Cooperative Patent Classification (CPC):
**B32B 7/023; G02B 1/111; G02B 27/02**

(86) International application number:
**PCT/JP2024/008520**

(87) International publication number:
**WO 2024/203072 (03.10.2024 Gazette 2024/40)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **31.03.2023 JP 2023057683**

(71) Applicant: **Nitto Denko Corporation
Ibaraki-shi
Osaka 567-8680 (JP)**

(72) Inventors:
• **SHIBUYA, Akihiro**
  **Ibaraki-shi, Osaka 567-8680 (JP)**
• **KOMOTO, Yusuke**
  **Ibaraki-shi, Osaka 567-8680 (JP)**
• **TAKEMOTO, Hiroyuki**
  **Ibaraki-shi, Osaka 567-8680 (JP)**

(74) Representative: **Hoffmann Eitle
Patent- und Rechtsanwälte PartmbB
Arabellastraße 30
81925 München (DE)**

(54) **AR DEVICE**

(57)      An AR device of the present invention includes a laminate (1), and the laminate (1) has a light guide plate (2) and a low refractive index layer (3) disposed on at least one side in a thickness direction of the light guide plate (2). Further, a refractive index of the low refractive index layer (3) is 1.25 or less, and a thickness of the low refractive index layer (3) is 1.5 $\mu$m or more and 10 $\mu$m or less.

FIG. 2

1

Thickness direction

Plane direction

EP 4 697 082 A1

# EP 4 697 082 A1

**Description**

TECHNICAL FIELD

The present invention relates to an AR device.

BACKGROUND ART

Recently, AR (Augmented Reality: augmented reality) techniques have attracted attention, and AR devices (for example, AR glass and head-mounted display) used in AR have been developed.

As such AR devices, AR glass having an image generation device and a lens portion is known. Specifically, light emitted from the image generation device enters a light guide plate provided in the lens portion, and total reflection is repeated at the light guide plate to be emitted toward pupils of a user, so that it is possible to display an image. In the lens portion, an optical plate (for example, transparent glass) which protects the light guide plate so as to prevent damage to the light guide plate is usually provided. Further, since it is necessary to totally reflect the entering light at the light guide plate in the lens portion, it is proposed that an air layer is formed between the light guide plate and the optical plate (ref: for example, Patent Document 1 below).

Citation List

Patent Document

Patent Document 1: Japanese Unexamined Patent Publication No. 2011-221129

SUMMARY OF THE INVENTION

PROBLEM TO BE SOLVED BY THE INVENTION

However, in the AR device in which the air layer is provided between the light guide plate and the optical plate such as Patent Document 1, when external force is directly applied to the optical plate, the light guide plate may be damaged. On the other hand, by thickening the air layer, it is possible to prevent such damage, and there is a problem that the lens portion is thickened.

Further, in the AR device including the air layer between the light guide plate and the optical plate such as Patent Document 1, there is also a problem such as occurrence of a light leakage when water or a stain is attached to the light guide plate.

Therefore, it is considered that the above-described problem is solved by using a laminate having the light guide plate and a layer having a low refractive index without having the air layer in the lens portion.

However, in such a laminate, there is a problem that the reflected light at the light guide plate and the reflected light at the layer having the low refractive index interfere with each other, color unevenness occurs on the surface of the laminate, and transparency is poor.

The present invention provides an AR device including a laminate capable of achieving thinning thereof, suppressing a light leakage from a light guide plate, and further suppressing color unevenness on its surface and having excellent transparency.

MEANS FOR SOLVING THE PROBLEM

The present invention [1] includes an AR device including a laminate having a light guide plate and a low refractive index layer disposed on at least one side in a thickness direction of the light guide plate, wherein a refractive index of the low refractive index layer is 1.25 or less, and a thickness of the low refractive index layer is 1.5 $\mu$m or more and 10 $\mu$m or less.

The present invention [2] includes the AR device described in the above-described [1], wherein a standard deviation in a thickness of the low refractive index layer is 10% or less.

The present invention [3] includes the AR device described in the above-described [1] or [2], wherein a thickness of the light guide plate is 0.3 mm or more and 5 mm or less.

The present invention [4] includes the AR device described in any one of the above-described [1] to [3] including the laminate further having a pressure-sensitive adhesive layer disposed on at least one side in the thickness direction of the light guide plate.

The present invention [5] includes the AR device described in any one of the above-described [1] to [4] including the laminate further having a substrate layer disposed on at least one side in the thickness direction of the light guide plate.

The present invention [6] includes the AR device described in any one of the above-described [1] to [5], wherein in a color unevenness evaluation test described below, color unevenness is not visually confirmed on the surface of the laminate when observed from a 0° position on one side in the thickness direction of the laminate.

[Color Unevenness Evaluation Test]

The laminate of 100 mm× 100 mm is set so as to be flat and is visually observed from the 0° position (position perpendicular to a plane direction at a central portion of the laminate) on one side in the thickness direction of the laminate, and further, a picture thereof is photographed from the same position. A presence or absence of the color unevenness is evaluated by visual observation and confirmation of the photographed picture.

EFFECT OF THE INVENTION

The AR device of the present invention includes the laminate having the light guide plate and the low refractive index layer disposed on at least one side in the thickness direction of the light guide plate. Further, the refractive index of the low refractive index layer is 1.25 or less, and the thickness of the low refractive index layer is 1.5 $\mu$m or more and 10 $\mu$m or less. Since the laminate does not include the air layer, the AR device of the present invention is capable of achieving thinning thereof and suppressing a light leakage from the light guide plate. Further, since the low refractive index layer has a specific thickness, it is possible to suppress the color unevenness on its surface, and excellent transparency is achieved.

BRIEF DESCRIPTION OF THE DRAWINGS

FIG. 1 shows a whole structure view of one embodiment of an AR device of the present invention.
FIG. 2 shows a cross-sectional view of a first embodiment of a laminate provided in the AR device shown in FIG. 1.
FIGS. 3 show schematic views for illustrating one embodiment of a method for producing a laminate provided in the AR device shown in FIG. 1:
FIG. 3A illustrating a step of preparing a light guide plate in a first step,
FIG. 3B illustrating a step of disposing a low refractive index layer on one surface in a thickness direction of the light guide plate,
FIG. 3C illustrating a step of disposing a pressure-sensitive adhesive layer on one surface in the thickness direction of the low refractive index layer in a second step, and
FIG. 3D illustrating a step of disposing a substrate layer on one surface in the thickness direction of a pressure-sensitive adhesive layer.
FIG. 4 shows a cross-sectional view of a second embodiment of a laminate provided in the AR device shown in FIG. 1.
FIG. 5 shows a cross-sectional view of a third embodiment of a laminate provided in the AR device shown in FIG. 1.

DESCRIPTION OF EMBODIMENTS

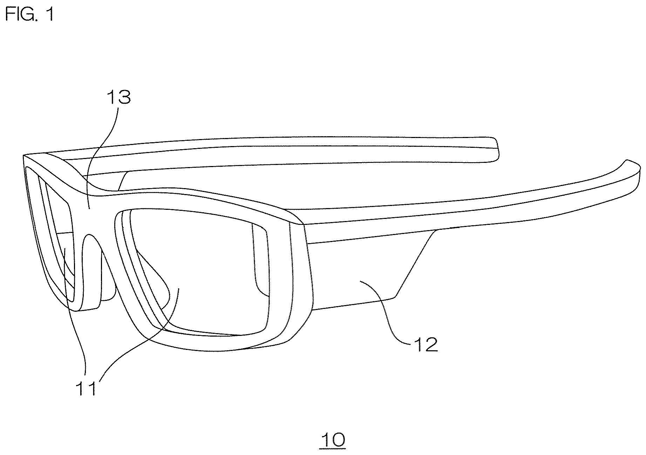

One embodiment of an AR device of the present invention is described with reference to FIG. 1.

<AR Device>

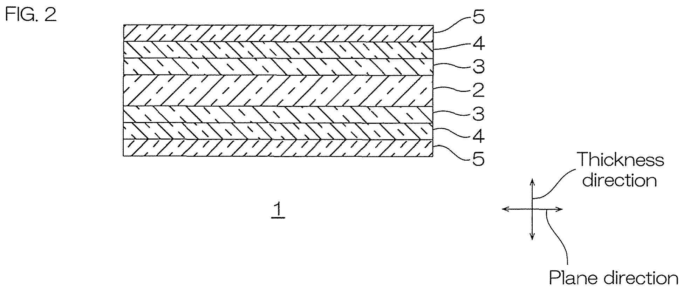

An example of an AR device 10 includes AR glass.
As shown in FIG. 1, the AR device 10 (AR glass) includes a lens portion 11 and includes, for example, an image generation device 12 and an attached portion 13.
The lens portion 11 includes a laminate 1 to be described later.
As a mechanism of the AR device 10, for example, light emitted from the image generation device 12 enters the lens portion 11 to be totally reflected by the light guide plate of the lens portion 11 and emitted toward pupils of a user, thereby displaying an image.
Next, a first embodiment of the laminate 1 provided in the AR device 10 is described with reference to FIG. 2.
In FIG. 2, an up-down direction on the plane of the sheet is an up-down direction (thickness direction, first direction), an upper side on the plane of the sheet is an upper side (one side in the thickness direction, one side in the first direction), and a lower side on the plane of the sheet is a lower side (other side in the thickness direction, other side in the first direction). Further, a right-left direction on the plane of the sheet and a depth direction are a plane direction perpendicular to the up-down direction.

**EP 4 697 082 A1**

<Laminate>

As shown in FIG. 2, the laminate 1 extends in the plane direction perpendicular to the thickness direction, and has a flat upper surface (one surface in the thickness direction) and a flat lower surface (the other surface in the thickness direction).

As shown in FIG. 2, the laminate 1 of the first embodiment has a light guide plate 2 and a low refractive index layer 3, a pressure-sensitive adhesive layer 4, and a substrate layer 5 which are disposed at one side and the other side in the thickness direction of the light guide plate 2. Specifically, the laminate 1 has the light guide plate 2 and the low refractive index layer 3, the pressure-sensitive adhesive layer 4, and the substrate layer 5 in order on one side in the thickness direction of the light guide plate 2 toward one side in the thickness direction, and furthermore, has the low refractive index layer 3, the pressure-sensitive adhesive layer 4, and the substrate layer 5 in order on the other side in the thickness direction of the light guide plate 2 toward the other side in the thickness direction.

That is, since the laminate 1 does not have an air layer, it is possible to achieve thinning of the laminate 1, and furthermore, since the low refractive index layer 3 is disposed on one surface in the thickness direction and the other surface in the thickness direction of the light guide plate 2, it is possible to suppress attachment of water or a statin to the light guide plate 2, and suppress a light leakage from the light guide plate 2.

Total light transmittance of the laminate 1 is, for example, 60% or more, preferably 70% or more, more preferably 80% or more, further more preferably 90% or more, and for example, 99% or less, preferably 98% or less, more preferably 97% or less.

When the total light transmittance of the laminate 1 is within the above-described range, excellent transparency is achieved.

Haze of the laminate 1 is, for example, 0.1% or more, preferably 0.2% or more, more preferably 0.3% or more, and for example, 3% or less, preferably 2.5% or less, more preferably 2% or less.

When the haze of the laminate 1 is within the above-described range, it has the excellent transparency.

A thickness of the laminate 1 is, for example, 4.8 mm or less, preferably 3.8 mm or less, more preferably 2.8 mm or less, and for example, 0.35 mm or more, preferably 0.55 mm or more, more preferably 0.75 mm or more.

When the thickness of the laminate 1 is the above-described upper limit or less, it is possible to achieve the thinning. Further, when the thickness of the laminate 1 is the above-described lower limit or more, it has sufficient strength.

[Light Guide Plate]

The light guide plate 2 is configured so that entering light repeats the total reflection to be propagated, and emits the light at a predetermined position toward a predetermined direction. Specifically, in the AR device 10, the light emitted from the image production device 12 enters the lens portion 11. The light entering the lens portion 11 repeats the total reflection in the light guide plate 2, propagates, and is emitted toward the pupils of the user. As a result, the image from the image generation device 12 is visually recognized by the user of the AR device 10.

Examples of a material for the light guide plate 2 include glass and plastic having the transparency.

A refractive index of the light guide plate 2 is, for example, 1.4 or more, preferably 1.6 or more, more preferably 1.8 or more, further more preferably 2.0 or more, and for example, 2.5 or less, preferably 2.4 or less, more preferably 2.3 or less.

When the refractive index of the light guide plate 2 is within the above-described range, light entering from the image generation device 12 and light emission to the pupils of the user are excellent, and furthermore, it is possible to reliably totally reflect the light entering the light guide plate 2.

An Abbe's number of the light guide plate 2 is, for example, 10 or more, preferably 15 or more, and for example, 80 or less, preferably 70 or less.

Thickness unevenness (TTV: Total Thickness Variation) on one surface in the thickness direction and the other surface in the thickness direction of the light guide plate 2 is, for example, 5 $\mu$m or less, preferably 3 $\mu$m or less, more preferably 1 $\mu$m or less. The smaller the thickness unevenness, the more preferable.

When the thickness unevenness of the light guide plate 2 is the above-described upper limit or less, it is possible to decrease a strain of an optical path in the light guide plate 2.

The thickness unevenness can be measured using a reflective interferometric film thickness meter (Optical NanoGauge film thickness meter, manufactured by Hamamatsu Photonics K.K.).

Surface roughness Ra on a one-side surface in the thickness direction and an other side-surface in the thickness direction of the light guide plate 2 is, for example, 10 nm or less, preferably 5 nm or less, more preferably 1 nm or less, and for example, 0.1 nm or more.

When the surface roughness Ra of the light guide plate 2 is the above-described upper limit or less, it is possible to decrease the haze of the laminate 1.

The surface roughness Ra of the light guide plate 2 can be adjusted, for example, by polishing the one-side surface in the thickness direction and the other-side surface in the thickness direction of the light guide plate 2.

Further, the surface roughness Ra is arithmetic average roughness based on JIS B 0601.

These light guide plates 2 may be used alone or by laminating a plurality of pieces.

The thickness of the light guide plate 2 is, for example, 0.3 mm or more, preferably 0.4 mm or more, more preferably 0.5 mm or more, and for example, 5.0 mm or less, preferably 4.0 mm or less, more preferably 3.8 mm or less, further more preferably 3.6 mm or less.

The thickness of the light guide plate 2 described above shows the total thickness when used by laminating the plurality of light guide plates 2.

[Low Refractive Index Layer]

The low refractive index layer 3 is a layer having a lower refractive index than the light guide plate 2, the pressure-sensitive adhesive layer 4 to be described later, and the substrate layer 5 to be described later. It is possible to totally reflect the light entering the laminate 1 in the light guide plate 2 by the low refractive index layer 3.

The low refractive index layer 3 is disposed on one surface in the thickness direction and the other surface in the thickness direction of the light guide plate 2.

The low refractive index layer 3 is formed, for example, by coating and drying a low refractive index layer coating liquid. Specifically, the low refractive index layer 3 is a dry body of the low refractive index layer coating liquid.

The low refractive index layer coating liquid includes, for example, particles and a dispersion medium.

A shape of the particles is not particularly limited, and examples thereof include spherical shapes, plate-like shapes, needle-like shapes, string-like shapes, and grape bunch-like shapes. Examples of the string-like particles include particles in which the plurality of particles having spherical, plate-like, or needle-like shapes are connected in a number of beads; short fiber-like particles (for example, short fiber-like particles described in Japanese Unexamined Patent Publication No. 2001-188104); and combinations of these. Examples of the grape bunch-like particles include those in which the plurality of spherical, plate-like, and needle-like particles are aggregated into a grape bunch.

The shape of the particles can be confirmed, for example, by observation with a transmission electron microscope.

Examples of the particles include hollow particles (for example, hollow nano-silica/nano-balloon particles), porous particles, and nano-fibers (for example, cellulose nano-fibers, alumina nano-fibers, and silica nano-fibers). Preferably, porous particles are used. These particles may be used alone or in combination of two or more.

Examples of the material for the porous particles include organic materials and inorganic materials. Preferably, an inorganic material is used. These materials for the porous particles may be used alone or in combination of two or more.

Examples of the organic material include polymerizable monomers (for example, (meth)acrylic monomers and styrene monomers) and curable resins (for example, (meth)acrylic resins, fluorine-containing resins, and urethane resins).

Examples of the inorganic material include silicon compounds containing Si, magnesium compounds containing Mg, aluminum compounds containing Al, titanium compounds containing Ti, zinc compounds containing Zn, and zirconium compounds containing Zr. Preferably, a silicon compound is used.

Examples of the silicon compound include silica-based compounds (for example, hydrolyzable silanes and partial hydrolysates and dehydration condensate of these), silicon compounds containing a silanol group (for example, active silica obtained by contacting a silicate with an acid or an ion exchange resin). Preferably, a silicon compound containing a silanol group is used.

When the silicon compound is a trifunctional silane, it is possible to form the low refractive index layer 3 having a particularly low refractive index. Further, in the case of a tetrafunctional silane, it is possible to form the low refractive index layer 3 having excellent scratch resistance.

In other words, as the particles, preferably, porous particles of the silicon compound are used. The porous particles of such a silicon compound can be obtained, for example, by gelating the silicon compound in a hydrophilic medium, aging the obtained gelatinous silicon compound, and pulverizing the gelatinous silicon compound after the aging.

Examples of the silicon compound include tris(hydroxy)methylsilane and trimethoxy(methyl)silane. The tris(hydroxy)methylsilane can be obtained, for example, by hydrolyzing the trimethoxy(methyl)silane, and is a precursor of the gelatinous silicon compound to be described later.

Examples of the hydrophilic medium include isopropyl alcohol (IPA), ethanol, methanol, butanol, acetone, dimethylformamide (DMF), and dimethyl sulfoxide (DMSO). Preferably, IPA and DMSO are used. These hydrophilic mediums may be used alone or in combination of two or more. In addition, the hydrophilic medium may be mixed with water.

The gelation of the silicon compound leads to, for example, a dehydration condensation reaction between the silicon compounds. The dehydration condensation is preferably reacted in the presence of a catalyst.

Examples of the catalyst include acid catalysts and base catalysts. Examples of the acid catalyst include hydrochloric acid, oxalic acid, and sulfuric acid. Further, examples of the base catalyst include ammonia, potassium hydroxide, sodium hydroxide, and ammonium hydroxide.

Further, an aging temperature of the obtained gelatinous silicon compound is, for example, 20°C or more and for example, 50°C or less. Aging time is, for example, 10 hours or more, preferably 15 hours or more.

A pulverization method for the gelatinous silicon compound after the aging is not particularly limited, and can be pulverized by a known method. An example of the pulverization method includes a method using a pulverizing device which uses cavitation phenomena such as an ultrasound homogenizer and a high-speed rotating homogenizer. Specifically, an example thereof includes high-pressure media-less pulverization using a homogenizer.

Thus, it is possible to obtain a sol liquid in which the porous particles of the silicon compound are dispersed in the hydrophilic medium.

It is possible to obtain the low refractive index layer coating liquid by replacing the hydrophilic medium contained in the sol liquid with the dispersion medium.

Examples of the dispersion medium include alcohols, esters, ethers, ketones, and aromatic hydrocarbons. Preferably, alcohols and ethers are used.

Examples of the alcohols include ethanol, isopropyl alcohol, butanol, t-butanol, isobutyl alcohol, and 2-methoxyethanol (methyl cellosolve), and preferably, isobutyl alcohol is used. Examples of the esters include ethyl acetate and butyl acetate. Examples of the ethers include diisopropyl ether, diethylene glycol methyl ethyl ether and propylene glycol monomethyl ether, and preferably, diethylene glycol methyl ethyl ether is used. Examples of the ketones include acetone, methyl ethyl ketone, and methyl isobutyl ketone. An example of the aromatic hydrocarbons includes toluene.

These dispersion mediums may be used alone or in combination of two or more, and preferably, isobutyl alcohol and diethylene glycol methyl ethyl ether are used in combination.

In addition, a method for replacing the hydrophilic medium with the dispersion medium is not particularly limited, and examples thereof include decantation, cross-flow filtration, and dynamic filter. These replacements are preferably carried out in a plurality of times. It is also possible to adjust a mixing ratio of the particles, if necessary, using the above-described dispersion medium.

The mixing ratio of the particles in the low refractive index layer coating liquid is, for example, 0.1 parts by mass or more, preferably 0.5 parts by mass or more, and for example, 50 parts by mass or less, preferably 30 parts by mass or less with respect to 100 parts by mass of the dispersion medium.

Viscosity of the low refractive index layer coating liquid is, for example, 0.1 mPa·s or more, preferably 1.0 mPa·s or more, and for example, 2000 mPa·s or less, preferably 200 mPa·s or less.

The viscosity can be calculated with a rheometer manufactured by Anton Paar GmbH.

In this way, it is possible to obtain the low refractive index layer coating liquid.

When the low refractive index layer coating liquid contains the porous particles of the silicon compound, it is possible to stably produce the laminate 1 having desired optical properties.

In the low refractive index layer coating liquid, a volume average particle size of the particles is, for example, 0.10 $\mu$m or more, preferably 0.20 $\mu$m or more, more preferably 0.40 $\mu$m or more, and for example, 2.00 $\mu$m or less, preferably 1.50 $\mu$m or less, more preferably 1.00 $\mu$m or less.

In the low refractive index layer coating liquid, as a particle size distribution of the particles, a ratio of the particles having a particle size of 0.4 $\mu$m to 1 $\mu$m is, for example, 50% by mass or more, preferably 80% by mass or more, more preferably 90% by mass or more, and for example, 99.9% by mass or less, preferably 99.8% by mass or less, more preferably 99.7% by mass or less with respect to the total amount of the particles.

In the low refractive index layer coating liquid, as the particle size distribution of the particles, the ratio of the particles having the particle size of 1 $\mu$m to 2 $\mu$m is, for example, 0.1% by mass or more, preferably 0.2% by mass or more, more preferably 0.3% by mass or more, and for example 50% by mass or less, preferably 20% by mass or less, more preferably 10% by mass or less with respect to the total amount of the particles.

The particle size distribution can be measured, for example, with a particle size distribution evaluation device such as a dynamic light scattering method and a laser diffraction method and an electron microscope such as a scanning electron microscope (SEM) and a transmission electron microscope (TEM). The volume average particle size is an indicator of the unevenness of the particle size of a pulverized body.

By adjusting the volume average particle size and the particle size distribution of the particles in the low refractive index layer coating liquid, it is possible to adjust porosity and the refractive index of the low refractive index layer 3 to be described later. That is, when the volume average particle size and the particle size distribution of the particles are within the above-described range, it is possible to obtain the desired porosity and the desired refractive index of the low refractive index layer 3.

It is possible to obtain the low refractive index layer 3 by coating the low refractive index layer coating liquid and drying it.

The low refractive index layer 3 which is the dry body of the low refractive index layer coating liquid has, for example, a void inside thereof.

A method for forming the void in the low refractive index layer 3 is not particularly limited, and for example, porous particles are chemically bonded to each other to form a porous body, and the void is formed in the porous body. Specifically, when the porous particles are the porous particles of the silicon compound, a silicone porous body is formed.

A form of chemical bonding between the porous particles is not particularly limited, and examples thereof include cross-linking bonding, covalent bonding, and hydrogen bonding. Specifically, when the porous particles are the porous particles of the silicon compound, the porous particles of the silicon compound have siloxane bonding.

In the low refractive index layer 3, when the silicone porous body is formed, a ratio of the unbonded silicon atom (that is, the residual silanol) of all the silicon atoms contained in the silicone porous body is, for example, below 50%, preferably 30% or less, more preferably 15% or less.

The above-described porous particles are chemically bonded to each other, for example, by the effect of the catalyst, light irradiation, heating, or the like. They may be bonded via a small amount of binder component (for example, a binder component at an amount of the mass of the particles or less).

Further, the low refractive index layer 3 preferably has an open-cell structure in which pore structures of the porous particles are continuous. The open-cell structure means that, for example, in the porous body, the pore structures are three-dimensionally connected, and is a state where the internal voids of the pore structures are continuous. When the porous body has the open-cell structure, it is possible to increase the porosity.

When the particles are closed-cell particles (particles having a pore structure individually) such as hollow silica, it is impossible to form the open-cell structure. On the other hand, when the particles are the porous particles of the silicon compound, they have a three-dimensional dendritic structure. Therefore, when the low refractive index layer coating liquid is coated and the coating film is formed, the porous particles of the silicon compound are precipitated and deposited, so that it is possible to easily form the open-cell structure.

The low refractive index layer 3 preferably has a monolith structure in which the open-cell structure contains a plurality of pore distributions. The monolith structure means, for example, a hierarchical structure including a structure in which nano-sized fine voids (nano voids) are present and the open-cell structure in which the nano voids are assembled. When the monolith structure is formed, for example, the high porosity is imparted with the coarse open-cell structure, while the film strength is imparted with the fine voids, and it is possible to achieve both the film strength and the high porosity. Such a monolith structure is preferably formed by controlling the pore distribution of the void structure to be generated in the porous particles of the silicon compound. Further, for example, by controlling the particle size distribution of the porous particles of the silicon compound to a desired size, it is possible to form the monolith structure.

The porosity of the low refractive index layer 3 is, for example, 35% by volume or more, preferably 38% by volume or more, more preferably 40% by volume or more, and for example, 90% by volume or less, preferably 75% by volume or less.

When the porosity of the low refractive index layer 3 is the above-described lower limit or more, it is possible to include much air, and lower the refractive index. When the porosity of the low refractive index layer 3 is the above-described upper limit or less, it is possible to sufficiently ensure the strength.

The porosity can be determined by calculating the porosity from, for example, the refractive index value measured with an ellipsometer by Lorentz-Lorenz's formula (formula of Lorenz-Lorenz).

The size of the void (pore) in the low refractive index layer 3 is not particularly limited, and is, for example, 2 nm or more, preferably 5 nm or more, more preferably 10 nm or more, further more preferably 20 nm or more, and for example, 500 nm or less, preferably 200 nm or less, more preferably 100 nm or less.

The size of the void (pore) refers to a diameter of a long axis among the diameter of the long axis and the diameter of a short axis of the void (pore), and can be quantified by a gas adsorption method (BET method).

The refractive index of the low refractive index layer 3 is 1.25 or less, preferably 1.20 or less, more preferably 1.18 or less, further more preferably 1.16 or less, particularly preferably 1.14 or less, and for example, 1.05 or more, preferably 1.08 or more, more preferably 1.10 or more.

When the refractive index of the low refractive index layer 3 is the above-described upper limit or less, it is possible to reliably totally reflect the light entering the light guide plate 2.

The refractive index of the low refractive index layer 3 can be measured using, for example, the ellipsometer. Examples of conditions include a wavelength of 550 nm and an angle of incidence of 50 to 80 degrees.

The total light transmittance of the low refractive index layer 3 is, for example, 85% or more, preferably 87% or more, more preferably 89% or more, and for example, 99% or less, preferably 98% or less, more preferably 97% or less.

When the total light transmittance of the low refractive index layer 3 is within the above-described range, it is possible to ensure the excellent transparency.

The haze of the low refractive index layer 3 is, for example, below 5%, preferably below 3%, and for example, 0.1% or more.

When the haze of the low refractive index layer 3 is below the above-described upper limit, it is possible to ensure the excellent transparency.

The haze of the low refractive index layer 3 can be measured with a haze meter (HM-150, manufactured by MURAKAMI COLOR RESEARCH LABORATORY CO., LTD.). A haze value is calculated according to the following formula.

$$\text{Haze (\%)} = (\text{diffuse transmittance (\%)}/\text{ total light transmittance (\%)}) \times 100\ (\%)$$

The thickness of the low refractive index layer 3 is 10 $\mu$m or less, preferably 8 $\mu$m or less, more preferably 6 $\mu$m or less. Further, the thickness of the low refractive index layer 3 is 1.5 $\mu$m or more, preferably 1.8 $\mu$m or more, more preferably 2.0 $\mu$m or more, further more preferably 2.5 $\mu$m or more, particularly preferably 3.0 $\mu$m or more, most preferably 3.5 $\mu$m or more.

The thickness of the low refractive index layer 3 described above shows the total thickness of the low refractive index layer 3 which is disposed on the single side of either one side in the thickness direction or the other side in the thickness direction of the light guide plate 2 in the laminate 1.

When the thickness of the low refractive index layer 3 is the above-described upper limit or less, it is possible to achieve the thinning of the low refractive index layer 3, and the laminate 1 has the excellent productivity. Further, when the thickness of the low refractive index layer 3 is the above-described lower limit or more, it is possible to suppress the interference of the reflected light at the light guide plate 2 and the reflected light at the low refractive index layer 3, and suppress the color unevenness on the surface of the laminate 1. Accordingly, the laminate 1 has the excellent transparency.

A standard deviation of the thickness of the low refractive index layer 3 is, for example, 10% or less, preferably 9% or less, more preferably 8% or less, and for example, 1% or more, preferably 3% or more, more preferably 5% or more.

When the standard deviation of the thickness of the low refractive index layer 3 is within the above-described range, it is possible to suppress the color unevenness on the surface of the laminate 1.

[Pressure-Sensitive Adhesive Layer]

The pressure-sensitive adhesive layer 4 is a layer which bonds the low refractive index layer 3 to the substrate layer 5 to be described later, and has a buffering function (cushioning function) with respect to external force.

The pressure-sensitive adhesive layer 4 is disposed on one surface in the thickness direction of the low refractive index layer 3 at one side in the thickness direction of the light guide plate 2, and disposed on the other surface in the thickness direction of the low refractive index layer 3 at the other side in the thickness direction of the light guide plate 2.

The pressure-sensitive adhesive layer 4 has, for example, hardness at such a degree that it does not penetrate into the void of the low refractive index layer 3. That is, a shear storage elastic modulus at 23°C of the pressure-sensitive adhesive layer 4 is, for example, $0.2 \times 10^5$ (Pa) or more, preferably $0.5 \times 10^5$ (Pa) or more, more preferably $0.8 \times 10^5$ (Pa) or more, further more preferably $1.0 \times 10^5$ (Pa) or more, particularly preferably $1.2 \times 10^5$ (Pa) or more. Further, from the viewpoint of durability, the shear storage elastic modulus at 23°C of the pressure-sensitive adhesive layer 4 is, for example, $5.0 \times 10^7$ (Pa) or less, preferably $3.0 \times 10^7$ (Pa) or less, more preferably $1.0 \times 10^7$ (Pa) or less, further more preferably $5.0 \times 10^6$ (Pa) or less, particularly preferably $3.0 \times 10^6$ (Pa) or less, most preferably $1.0 \times 10^6$ (Pa) or less.

When the shear storage elastic modulus of the pressure-sensitive adhesive layer 4 is within the above-described range, it has the buffering function (cushioning function) with respect to the external force, and has softness capable of suppressing damage of the low refractive index layer 3.

The shear storage elastic modulus is determined by reading the value at 23°C when measured under the conditions of a frequency of 1 Hz within the range of -50°C to 150°C at a temperature rising rate of 5°C/min in conformity with the method described in JIS K 7244-1: "Plastics- Determination of Dynamic Mechanical Properties".

The pressure-sensitive adhesive layer 4 is made of a pressure-sensitive adhesive (pressure-sensitive adhesive composition), and the pressure-sensitive adhesive (pressure-sensitive adhesive composition) is not particularly limited. Specifically, examples of the pressure-sensitive adhesive include acrylic pressure-sensitive adhesives (acrylic pressure-sensitive adhesive compositions).

The acrylic pressure-sensitive adhesive composition includes, for example, a (meth)acrylic polymer as a main component (base polymer). The main component means a component contained at the ratio of 50% by mass or more with respect to the total amount of the solid content of the acrylic pressure-sensitive adhesive composition.

The (meth)acrylic polymer is contained at the ratio of, for example, 50% by mass or more, preferably 70% by mass or more, more preferably 90% by mass or more with respect to the total amount of the solid content of the acrylic pressure-sensitive adhesive composition.

The (meth)acrylic polymer is a polymer of a monomer component. The monomer component contains an alkyl (meth)acrylate as the main component. The main component means the component contained at the ratio of 50% by mass or more with respect to the total amount of the monomer component. Further, the (meth)acrylate refers to an acrylate and/or methacrylate.

The alkyl (meth)acrylate has, for example, a straight-chain or branched alkyl group having 1 to 18 carbon atoms, and preferably has a straight-chain or branched alkyl group having 3 to 9 carbon atoms.

Examples of the alkyl (meth)acrylate include propyl (meth)acrylate, isopropyl (meth)acrylate, butyl (meth)acrylate, isobutyl (meth)acrylate, sec-butyl (meth)acrylate, t-butyl (meth)acrylate, pentyl (meth)acrylate, neopentyl (meth)acrylate, isopentyl (meth)acrylate, hexyl (meth)acrylate, octyl (meth)acrylate, and 2-ethylhexyl (meth)acrylate. Preferably, butyl (meth)acrylate is used.

These alkyl (meth)acrylates may be used alone or in combination of two or more.

Examples of the monomer component include comonomer of carboxyl group-containing (meth)acrylate, hydroxyl group-containing (meth)acrylate, amide group-containing (meth)acrylate, aromatic ring-containing (meth)acrylate, and heterocyclic ring-containing (meth)acrylate in addition to the alkyl (meth)acrylate. Preferably, a hydroxyl group-containing (meth)acrylate and a heterocyclic ring-containing (meth)acrylate are used.

The hydroxy group-containing (meth)acrylate is not particularly limited as long as it has a polymerizable functional group and has a hydroxyl group. An example of the hydroxy group-containing (meth)acrylate includes hydroxyalkyl (meth)acrylate.

Examples of the hydroxyalkyl (meth)acrylate include 2-hydroxylethyl (meth)acrylate, 2-hydroxylbutyl (meth)acrylate, 3-hydroxypropyl (meth)acrylate, 4-hydroxylbutyl (meth)acrylate, 6-hydroxylhexyl (meth)acrylate, 8-hydroxyoctyl (meth)acrylate, and 10-hydroxydecyl (meth)acrylate. Preferably, 2-hydroxylbutyl (meth)acrylate is used.

Examples of the heterocyclic ring-containing (meth)acrylate include N-acryloylmorpholine, N-acryloylpiperidine, N-methacryloylpiperidine, and N-acryloylpyrrolidine. Preferably, N-acryloylmorpholine is used.

When the monomer component includes the heterocyclic ring-containing (meth)acrylate, it is possible to improve any durability of heat resistance and moisture resistance when the thinning of the pressure-sensitive adhesive layer 4 is achieved.

The acrylic pressure-sensitive adhesive composition may also include, for example, an additive. Examples of the additive include silane coupling agents and cross-linking agents. Examples of the silane coupling agent include epoxy group-containing silane coupling agents. Examples of the cross-linking agent include isocyanate-based cross-linking agents and peroxide-based cross-linking agents.

In the pressure-sensitive adhesive (pressure-sensitive adhesive composition), a polymerization method of the monomer component is not particularly limited. An example of the polymerization method of the monomer component includes solution polymerization.

Examples of the solvent used in the solution polymerization include ethyl acetate and toluene.

The details of the acrylic pressure-sensitive adhesive composition are described in, for example, Patent No. 4140736.

The thickness of the pressure-sensitive adhesive layer 4 is, for example, 3 μm or more, preferably 5 μm or more, more preferably 8 μm or more, and for example, 100 μm or less, preferably 50 μm or less, more preferably 30 μm or less.

The thickness of the pressure-sensitive adhesive layer 4 described above shows the total thickness of the pressure-sensitive adhesive layer 4 which is disposed on the single side of either one side in the thickness direction or the other side in the thickness direction of the light guide plate 2 in the laminate 1.

When the thickness of the pressure-sensitive adhesive layer 4 is the above-described lower limit or more, it is possible to suppress the damage of the light guide plate 2, and as a result, it is possible to excellently retain the optical properties of the laminate 1. Further, when the thickness of the pressure-sensitive adhesive layer 4 is the above-described upper limit or less, it is possible to achieve the thinning of the laminate 1, and furthermore, suppress the production cost.

The pressure-sensitive adhesive layer 4 has, for example, the higher refractive index than the low refractive index layer 3. A difference of the refractive index between the pressure-sensitive adhesive layer 4 and the low refractive index layer 3 (refractive index of the pressure-sensitive adhesive layer 4 - refractive index of the low refractive index layer 3) is, for example, 0.05 or more, preferably 0.1 or more, more preferably 0.3 or more, further more preferably 0.5 or more, particularly preferably 0.8 or more.

The refractive index of the pressure-sensitive adhesive layer 4 is, for example, 1.3 or more, preferably 1.5 or more, more preferably 1.8 or more, further more preferably 2.0 or more, and for example, 2.5 or less, preferably 2.4 or less, more preferably 2.3 or less.

[Substrate Layer]

The substrate layer 5 is a layer which improves the strength of the laminate 1 and protects the light guide plate 2.

The substrate layer 5 is disposed on one surface in the thickness direction of the pressure-sensitive adhesive layer 4 at one side in the thickness direction of the light guide plate 2, and disposed on the other surface in the thickness direction of the pressure-sensitive adhesive layer 4 at the other side in the thickness direction of the light guide plate 2.

The substrate layer 5 is, for example, a polymer film.

Examples of the material for the polymer film include (meth)acrylic resins, cellulose resins, cycloolefin resins, olefin resins, ester resins, polyamide resins, polycarbonate resins, and copolymer resins of these. Preferably, an ester resin is used. The (meth)acrylic resin is an acrylic resin and/or a methacrylic resin.

Examples of the cellulose resin include diacetyl cellulose and triacetyl cellulose. Examples of the cycloolefin resin include norbornene resins. An example of the olefin resin includes polypropylene. Examples of the ester resin include polyethylene terephthalate resins.

In other words, the substrate layer 5 is, for example, a polymer film, preferably a polymer film made of an ester resin, more preferably a polyethylene terephthalate film.

The thickness of the substrate layer 5 is, for example, 10 $\mu$m or more, preferably 20 $\mu$m or more, more preferably 30 $\mu$m or more, further more preferably 40 $\mu$m or more, and for example, 200 $\mu$m or less, preferably 150 $\mu$m or less, more preferably 100 $\mu$m or less, further more preferably 80 $\mu$m or less, particularly preferably 60 $\mu$m or less.

The thickness of the substrate layer 5 described above shows the total thickness of the substrate layer 5 which is disposed on the single side of either one side in the thickness direction or the other side in the thickness direction of the light guide plate 2 in the laminate 1.

When the thickness of the substrate layer 5 is within the above-described range, the AR device 10 has excellent surface protective properties, and it is possible to suppress the damage of the light guide plate 2.

A Young's modulus at 23°C of the substrate layer 5 is, for example, 2 GPa or more, preferably 2.5 GPa or more, more preferably 3 GPa or more, further more preferably 3.5 GPa or more, and for example, 10 GPa or less, preferably 8 GPa or less, more preferably 6 GPa or less.

When the Young's modulus of the substrate layer 5 is within the above-described range, the AR device 10 has the excellent surface protective properties, and it is possible to suppress the damage of the light guide plate 2.

The Young's modulus can be measured in conformity with the method described in JIS K 7127 (1999).

Moisture permeability of the substrate layer 5 is, for example, 0.1 g/m$^2$/24hr or more, preferably 0.5 g/m$^2$/24hr or more, more preferably 1 g/m$^2$/24hr or more, and for example, 1000 g/m$^2$/24hr or less, preferably 800 g/m$^2$/24hr or less, more preferably 500 g/m$^2$/24hr or less.

When the moisture permeability of the substrate layer 5 is within the above-described range, it is possible to further suppress the damage of the light guide plate 2.

The moisture permeability can be measured in conformity with the method described in JIS Z 0208.

The substrate layer 5 has, for example, the higher refractive index than the low refractive index layer 3. The difference of the refractive index between the substrate layer 5 and the low refractive index layer 3 (refractive index of the substrate layer 5- refractive index of the low refractive index layer 3) is, for example, 0.05 or more, preferably 0.1 or more, more preferably 0.3 or more, further more preferably 0.5 or more, particularly preferably 0.8 or more.

The refractive index of the substrate layer 5 is, for example, 1.3 or more, preferably 1.5 or more, more preferably 1.8 or more, further more preferably 2.0 or more, and for example, 2.5 or less, preferably 2.4 or less, more preferably 2.3 or less.

< Method for Producing Laminate>

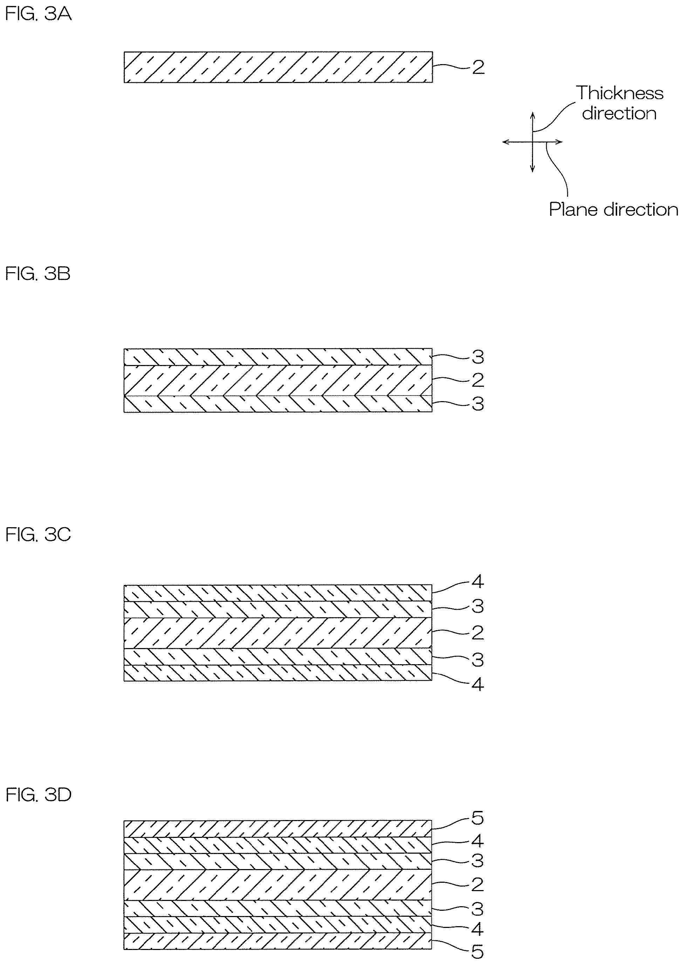

A method for producing the laminate 1 is described with reference to FIG. 3.

In the method for producing the laminate 1 to be described later, the laminate 1 having the light guide plate 2 and the low refractive index layer 3, the pressure-sensitive adhesive layer 4, and the substrate layer 5 at one side in the thickness direction of the light guide plate 2 in order toward one side in the thickness direction, and furthermore, having the low refractive index layer 3, the pressure-sensitive adhesive layer 4, and the substrate layer 5 at the other side in the thickness direction of the light guide plate 2 in order toward the other side in the thickness direction is described.

The method for producing the laminate 1 includes a first step of disposing (laminating) the low refractive index layer 3 on one surface in the thickness direction and the other surface in the thickness direction of the light guide plate 2; a second step of disposing (laminating) the pressure-sensitive adhesive layer 4 on one surface in the thickness direction of the low refractive index layer 3 disposed on one surface in the thickness direction of the light guide plate 2 and on the other surface in the thickness direction of the low refractive index layer 3 disposed on the other surface in the thickness direction of the light guide plate 2; and a third step of disposing (laminating) the substrate layer 5 on one surface in the thickness direction of the pressure-sensitive adhesive layer 4 disposed at one side in the thickness direction of the light guide plate 2 and on the other surface in the thickness direction of the pressure-sensitive adhesive layer 4 disposed at the other side in the thickness direction of the light guide plate 2.

[First Step]

First, as shown in FIG. 3A, the light guide plate 2 is prepared, and the low refractive index layer coating liquid is coated onto one surface in the thickness direction and the other surface in the thickness direction of the light guide plate 2.

An example of the coating method includes spray coating. In the spray coating, the low refractive index layer coating liquid is sprayed toward the light guide plate 2, thereby forming the coating film of the low refractive index layer 3 on the light guide plate 2.

In the spray coating, a distance (coating distance) between a spray head spraying the low refractive index layer coating liquid and the light guide plate 2 can be appropriately adjusted. By adjusting the distance between the spray head and the light guide plate 2, it is possible to adjust thickness unevenness and the haze of the low refractive index layer 3.

The distance (coating distance) between the spray head and the substrate is, for example, 50 mm or more, preferably 100 mm or more, and for example, 500 mm or less, preferably 300 mm or less, more preferably 200 mm or less.

The spray coating is carried out by repeating a spraying step of spraying the low refractive index layer coating liquid, while the spray head moves in a plane direction X of the light guide plate 2 and a moving step of the spray head moving in a plane direction Y of the light guide plate 2 (Y direction is perpendicular to the X direction).

Atomization pressure of the spray coating is, for example, 50 kPa or more, preferably 80 kPa or more, and for example, 1000 kPa or less.

A coating amount of the spray coating is, for example, 0.1 mL/min or more, and for example, 20 mL/min or less.

A moving speed of the spray head in the spraying step is, for example, 1 mm/sec or more, and for example, 1000 mm/sec or less, preferably 500 mm/sec or less, more preferably 400 mm/sec or less, further more preferably 300 mm/sec or less.

A moving distance of the head in the moving step is, for example, 1 mm or more, and for example, 50 mm or less.

By adjusting the above-described conditions at the time of the spray coating (atomization pressure, coating amount, moving speed of the spray head, moving distance of the spray head), it is possible to adjust the thickness and the thickness unevenness of the low refractive index layer 3.

The coating film of the low refractive index layer 3 is heated and dried if necessary.

A heating temperature is, for example, 50°C or more, preferably 60°C or more, more preferably 65°C or more, and for example, 200°C or less, preferably 120°C or less, more preferably 100°C or less. The heating time is not particularly limited as long as the coating film can be sufficiently dried.

By heating and drying, a cross-linking reaction occurs between the plurality of particles contained in the coating film. Therefore, a three-dimensional basic structure is immobilized. In this manner, the low refractive index layer 3 can retain the sufficient strength and flexibility despite of the structure having the void.

As described above, as shown in FIG. 3B, the low refractive index layer 3 is disposed (laminated) on one surface in the thickness direction and the other surface in the thickness direction of the light guide plate 2.

[Second Step]

Examples of the method for forming the pressure-sensitive adhesive layer 4 include a method in which the above-described pressure-sensitive adhesive composition is coated onto a separator or the like subjected to a peeling treatment, the pressure-sensitive adhesive layer 4 is formed by solvent removal, and the pressure-sensitive adhesive layer 4 is transferred to the low refractive index layer 3 and a method in which the pressure-sensitive adhesive composition is coated onto the low refractive index layer 3 and the pressure-sensitive adhesive layer 4 is formed by the solvent removal.

The method for forming the pressure-sensitive adhesive layer 4 is not particularly limited. Examples of the method for forming the pressure-sensitive adhesive layer 4 include roll coating, kiss roll coating, gravure coating, reverse coating, roll brush, spray coating, dip roll coating, bar coating, knife coating, air knife coating, curtain coating, lip coating, and an extrusion coating method such as dye coating.

As described above, as shown in FIG. 3C, the pressure-sensitive adhesive layer 4 is disposed (laminated) on one surface in the thickness direction of the low refractive index layer 3 disposed on one surface in the thickness direction of the light guide plate 2 and on the other surface in the thickness direction of the low refractive index layer 3 disposed on the other surface in the thickness direction of the light guide plate 2.

[Third Step]

As shown in FIG. 3D, the substrate layer 5 is disposed (laminated) on one surface in the thickness direction of the pressure-sensitive adhesive layer 4 disposed at one side in the thickness direction of the light guide plate 2 and on the other surface in the thickness direction of the pressure-sensitive adhesive layer 4 disposed at the other side in the thickness direction of the light guide plate 2.

In this way, it is possible to produce the laminate 1.

<Modified Example of AR Device>

The above-described AR device 10 is the AR glass. Alternatively, it may be also, for example, a head-mounted display. Although not shown, the head-mounted display is a display to be attached onto the head such as a goggles-type or a helmet-type. The head-mounted display includes, for example, a display portion, an image generation device, and an attached portion. Further, the display portion includes the above-described laminate 1.

<Modified Example 1 of Laminate>

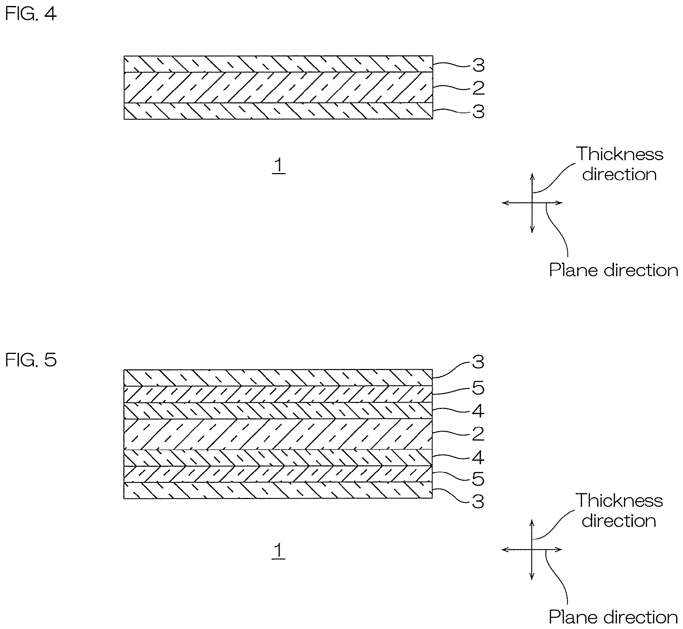

FIG. 4 shows a modified example (second embodiment) of the laminate 1 provided in the AR device 10 of the present invention. The laminate 1 of the second embodiment has the light guide plate 2 and the low refractive index layer 3 disposed on one surface in the thickness direction of the light guide plate 2, and further has the low refractive index layer 3 disposed on the other surface in the thickness direction of the light guide plate 2.

Although the laminate 1 of the first embodiment has the pressure-sensitive adhesive layer 4 and the substrate layer 5, it may not have the pressure-sensitive adhesive layer 4 and the substrate layer 5 in accordance with its purpose in the same manner as the laminate 1 of the second embodiment. Further, though not shown, only one of the pressure-sensitive adhesive layer 4 or the substrate 5 may be also provided.

<Modified Example 2 of Laminate>

FIG. 5 is a modified example (third embodiment) of the laminate 1 provided in the AR device 10 of the present invention. The laminate 1 of the third embodiment has the light guide plate 2 and the pressure-sensitive adhesive layer 4, the substrate layer 5, and the low refractive index layer 3 at one side in the thickness direction of the light guide plate 2 in order toward one side in the thickness direction, and further has the pressure-sensitive adhesive layer 4, the substrate layer 5, and the low refractive index layer 3 in order toward the other side in the thickness direction at the other side in the thickness direction of the light guide plate 2.

Although not shown, the laminate 1 may also have the plurality of pressure-sensitive adhesive layers 4 and the plurality of substrate layers 5.

In addition, the order of lamination of the laminate 1 is not particularly limited to the first embodiment and the third embodiment described above. Specifically, in the laminate 1, the order of lamination of the low refractive index layer 3, the pressure-sensitive adhesive layer 4, and the substrate layer 5 which are disposed at one side in the thickness direction and the other side in the thickness direction of the light guide plate 2 is not particularly limited.

In the first embodiment, the second embodiment, and the third embodiment described above, the same number of laminations and the same order of lamination are provided at one side in the thickness direction of the light guide plate 2 and the other side in the thickness direction of the light guide plate 2. Alternatively, the different number of laminations and the different order of lamination may be also provided. The lamination may be also made at only the single side of either one side in the thickness direction or the other side in the thickness direction.

Further, the laminate 1 may also have a layer (for example, a hard coat layer and an antireflection layer) other than the light guide plate 2, the low refractive index layer 3, the pressure-sensitive adhesive layer 4, and the substrate layer 5 described above, if necessary.

<Modified Example of Method for Producing Laminate>

The method for producing the laminate 1 is not particularly limited as long as the above-described laminate 1 can be produced.

In the method for producing the laminate 1 described above, the low refractive index layer 3, the pressure-sensitive adhesive layer 4, and the substrate layer 5 are laminated in parallel at one side in the thickness direction and the other side in the thickness direction of the light guide plate 2. Alternatively, for example, the low refractive index layer 3, the pressure-sensitive adhesive layer 4, and the substrate layer 5 are laminated at one side in the thickness direction of the light guide plate 2, and thereafter, the low refractive index layer 3, the pressure-sensitive adhesive layer 4, and the substrate layer 5 may be also laminated at the other side in the thickness direction of the light guide plate 2.

<Function and Effect>

The AR device 10 of the present invention includes the laminate 1, and the laminate 1 has the light guide plate 2, and the low refractive index layer 3 which is disposed on at least one side in the thickness direction of the light guide plate 2. The refractive index of the low refractive index layer 3 is 1.25 or less, and the thickness of the low refractive index layer 3 is 1.5 $\mu$m or more and 10 $\mu$m or less. Therefore, it is possible to achieve the thinning, suppress the light leakage from the light guide plate 2, and further, suppress the color unevenness on the surface, and the AR device 10 has the excellent transparency.

More specifically, the AR device 10 includes the laminate 1 having the low refractive index layer 3. Therefore, it is possible to reliably totally reflect the light entering the light guide plate 2 even without including the air layer, and furthermore, since it does not include the air layer, it is possible to achieve the thinning, and suppress the light leakage from the light guide plate 2.

Further, the AR device 10 of the present invention includes the laminate 1 having the low refractive index layer 3 having the particular thickness. Therefore, it is possible to suppress the interference of the reflected light at the light guide plate 2 and the reflected light at the low refractive index layer 3, and suppress the color unevenness on the surface. Accordingly, the laminate 1 has the excellent transparency.

Examples

Next, the present invention is further described based on Examples and Comparative Examples below. The present invention is however not limited by these Examples and Comparative Examples. The specific numerical values in mixing ratio (content ratio), property value, and parameter used in the following description can be replaced with upper limit values (numerical values defined as "or less" or "below") or lower limit values (numerical values defined as "or more" or "above") of corresponding numerical values in mixing ratio (content ratio), property value, and parameter described in the above-described "DESCRIPTION OF

EMBODIMENTS".

Example 1

<Preparation of Low Refractive Index Layer Coating Liquid>

[Gelation Step]

A liquid mixture A was prepared by dissolving 0.95 g of methyltrimethoxysilane (MTMS) as the silicon compound in 2.2 g of dimethyl sulfoxide (DMSO). Then, 0.5 g of 0.01 mol/L oxalic acid aqueous solution (catalytst) was added to the liquid mixture A to be stirred at room temperature for 30 minutes, thereby hydrolyzing MTMS. In this manner, a liquid mixture B containing the tris(hydroxy)methylsilane was obtained.

Next, after adding 0.38 g of 28% by mass of aqueous ammonia (catalyst) and 0.2 g of pure water to 5.5 g of DMSO, furthermore, the above-described liquid mixture B was added to the obtained mixture to be stirred at room temperature for 15 minutes. In this manner, the tris(hydroxy)methylsilane was gelated, thereby obtaining a liquid mixture C containing a gelatinous silicon compound.

[Aging Step]

The liquid mixture C containing the gelatinous silicon compound was incubated as it is at 40°C for 20 hours to be subjected to an aging treatment.

[Pulverization Step]

The liquid mixture C containing the gelatinous silicon compound after the aging treatment was subjected to a pulverization treatment (high-pressure media-less pulverization). The pulverization treatment (high-pressure media-less pulverization) used a homogenizer (trade name: "UH-50", manufactured by SMT Co., Ltd.) and 1.85 g of gelatinous silicon compound in the liquid mixture C containing the gelatinous silicon compound and 1.15 g of isopropanol (IPA) were weighed to be then pulverized under the conditions of 50 W and 20 kHz for two minutes.

By the pulverization treatment, the gelatinous silicon compound in the liquid mixture C containing the gelatinous silicon compound was pulverized, thereby obtaining a sol liquid D of the porous particles of the silicon compound.

Next, isobutyl alcohol and diethylene glycol methyl ethyl ether as the dispersion medium were added to the sol liquid D of the porous particles of the silicon compound, and the mixture was lightly stirred. Thereafter, the obtained mixture was left to stand at room temperature for six hours, thereby separating the hydrophilic medium from catalyst in the sol liquid D of the porous particles of the silicon compound by decantation. By carrying out the same decantation treatment three times, it was replaced with the dispersion medium, thereby obtaining the low refractive index layer coating liquid. The volume average particle size which showed particle size variation of the porous particles of the silicon compound contained in the low refractive index layer coating liquid was confirmed with a dynamic light scattering nanotrack particle size analyzer (UPA-EX150-type, manufactured by Nikkiso Co., Ltd.), and it was 0.50 $\mu$m to 0.70 $\mu$m.

<Production of Laminate>

As the light guide plate, an alkali-free glass of 100 mm× 100 mm (trade name: "EagleXG", manufactured by Corning Incorporated) and the above-described low refractive index layer coating liquid were set in a spray coater (trade name: "API-240" series, manufactured by Apeiros Co., Ltd.).

Next, the low refractive index layer coating liquid was spray-coated onto the alkali-free glass (light guide plate) under the following coating conditions, thereby forming the low refractive index layer coating film on one surface in the thickness direction of the alkali-free glass. The spray coating was carried out by repeating the spraying step of spraying a coating material, while the spray head moved in the plane direction X of the light guide plate and the moving step of the spray head moving in the plane direction Y of the light guide plate (Y direction was perpendicular to the X direction).

{Coating Conditions}

Atomization pressure: 100 kPa
Coating amount: 8.6 mL/min
Head speed in spraying step: 270 mm/sec
Head moving distance in moving step: 15 mm
Distance between spray head (nozzle) and alkali-free glass (coating distance): 125 mm

Next, the low refractive index layer coating film on one surface in the thickness direction of the alkali-free glass (light guide plate) was dried at 90°C for 10 minutes, thereafter, dried at 70°C for 24 hours, and the low refractive index layer was formed on one surface in the thickness direction of the light guide plate. In this manner, the laminate was obtained.

Example 2

<Production of Pressure-Sensitive Adhesive Layer>

A four-neck flask equipped with a stirring blade, a thermometer, a nitrogen gas introduction pipe, and a reflux condenser was charged with 90.7 parts by mass of butyl acrylate, 6 parts by mass of N-acryloylmorpholine, 3 parts by mass of acrylic acid, 0.3 parts by mass of 2-hydroxybutylacrylate, and 0.1 parts by mass of 2,2'-azobisisobutyronitrile as a polymerization initiator along with 100 g of ethyl acetate, and a nitrogen gas was introduced with gentle stirring to replace nitrogen. Thereafter, the mixture was subjected to a polymerization reaction for eight hours while keeping the liquid temperature at around 55°C in the flask, thereby preparing an acrylic polymer solution. An acrylic pressure-sensitive adhesive solution obtained by blending 0.2 parts by mass of isocyanate cross-linking agent (Coronate L, manufactured by Nippon Polyurethane Industry Co., Ltd., adduct product of tolylene diisocyanate of trimethylolpropane), 0.3 parts by mass of benzoyl peroxide (NYPER BMT, manufactured by NOF CORPORATION), and 0.2 parts by mass of $\gamma$-glycidoxypropylmethoxysilane (KBM-403, manufactured by Shin-Etsu Chemical Co., Ltd.) with respect to 100 parts by mass of the solid content of the obtained acrylic polymer solution was prepared. Next, the above-described acrylic pressure-sensitive adhesive solution was coated onto one surface of the polyethylene terephthalate (PET) film (manufactured by Mitsubishi Polyester Film Corporation, thickness: 38 $\mu$m) which was subjected to a silicone treatment so that the thickness of the pressure-sensitive adhesive layer after drying was 10 $\mu$m to be dried at 150°C for three minutes, thereby forming the pressure-sensitive adhesive layer. The shear storage elastic modulus at 23°C of the obtained pressure-sensitive adhesive was $1.3\times 10^5$ (Pa).

<Production of Laminate>

The above-described pressure-sensitive adhesive layer (thickness of 10 $\mu$m, storage elastic modulus of $1.3\times 10^5$ Pa) was transferred onto one surface in the thickness direction of the laminate (low refractive index layer) of Example 1. Further, as the substrate layer, a PET film (manufactured by Mitsubishi Polyester Film Corporation, thickness of 50 $\mu$m, Young's modulus at 23°C of 4.0 GPa) was laminated on one surface in the thickness direction of the pressure-sensitive adhesive layer. Thus, the laminate of Example 2 was obtained.

Comparative Example 1

The laminate of Comparative Example 1 was obtained in the same manner as Example 1, except that the head speed of the spraying step was changed to 350 mm/sec in the production of the laminate.

Comparative Example 2

The laminate of Comparative Example 2 was obtained in the same manner as Example 1, except that the head speed of the spraying step was changed to 300 mm/sec in the production of the laminate.

Comparative Example 3

The laminate of Comparative Example 3 was obtained by laminating the pressure-sensitive adhesive layer and the substrate layer in order on one surface in the thickness direction of the laminate (low refractive index layer) of Comparative Example 1 in the same manner as Example 2.

Comparative Example 4

The laminate of Comparative Example 4 was obtained by laminating the pressure-sensitive adhesive layer and the substrate layer in order on one surface in the thickness direction of the laminate (low refractive index layer) of Comparative Example 2 in the same manner as Example 2.

<Evaluation>

[Thickness of Low Refractive Index Layer]

In Example 1 and Comparative Examples 1 and 2, the film thickness of the low refractive index layer laminated on one surface in the thickness direction of the alkali-free glass (light guide plate) was measured using the reflective interferometric film thickness meter (Optical NanoGauge film thickness meter, manufactured by Hamamatsu Photonics K.K.) at a total of 100 points of 10 longitudinal points × 10 horizontal points at an interval of 10 mm. The average thickness, the maximum value of the thickness, the minimum value of the thickness, and the standard deviation of the thickness are shown in Table 1.

[Haze of Low Refractive Index Layer]

The low refractive index layers of Example 1 and Comparative Examples 1 and 2 were set in the haze meter (HM-150, manufactured by MURAKAMI COLOR RESEARCH LABORATORY CO., LTD.), and the haze of these were measured. The results are shown in Table 1. The haze is calculated by the following formula:

$$\text{Haze (\%)} = (\text{diffuse transmittance (\%)}/ \text{ total light transmittance (\%)}) \times 100 \text{ (\%)}$$

[Color Unevenness]

Each of the laminates of Examples and Comparative Examples was set so as to be flat and was visually observed from the 0° position (position perpendicular to the plane direction of the laminate in the central portion of the laminate) at one side in the thickness direction of the laminate, and furthermore, the picture thereof was photographed from the same position. In the same manner, each of the laminates of Examples and Comparative Examples was visually observed from the position which was inclined by 30° and 60° from the above-described 0° position to the plane direction at one side in the thickness direction of the laminate, and furthermore, the picture thereof was photographed from the same position. The visual observation and the photographed picture were checked, and a presence or absence of the color unevenness was evaluated by the following criteria. The results are shown in Tables 2 and 3.

{Criteria}

○: No color unevenness is confirmed in the visual observation and the picture.

×: In at least one of the visual observation and the picture, the color unevenness is confirmed.

[Table 1]

Table 1

| | Low Refractive Index Layer | | | | |
| --- | --- | --- | --- | --- | --- |
| | Average Thickness (μm) | Standard Deviation (%) | Maximum Thickness (μm) | Minimum Thickness (μm) | Haze (%) |
| Ex. 1 | 2.0 | 5.5 | 2.30 | 1.77 | 0.19 |
| Comparative Ex. 1 | 1.0 | 4.0 | 1.09 | 0.89 | 0.18 |
| Comparative Ex. 2 | 1.4 | 7.9 | 1.78 | 1.12 | 0.17 |

[Table 2]

Table 2

| | Structure of Laminate | Average Thickness of Low Refractive Index Layer (μm) | Color Uneveness Evaluation (Visual Observation, Picture Observation) | | |
| --- | --- | --- | --- | --- | --- |
| | | | 0° | 30° | 60° |
| Ex. 1 | Light Guide Plate/ Low Refractive Index Layer | 2.0 | ○ | ○ | × |
| Comparative Ex. 1 | Light Guide Plate/ Low Refractive Index Layer | 1.0 | × | × | × |
| Comparative Ex. 2 | Light Guide Plate/ Low Refractive Index Layer | 1.4 | × | × | × |

[Table 3]

Table 3

| | Structure of Laminate | Average Thickness of Low Refractive Index Layer (μm) | Color Uneveness Evaluation (Visual Observation, Picture Observation) | | |
| --- | --- | --- | --- | --- | --- |
| | | | 0° | 30° | 60° |
| Ex. 2 | Light Guide Plate/ Low Refractive Index Layer/ Pressure-Sensitive Adhesive Layer/ Substrate Layer | 2.0 | ○ | × | × |
| Comparative Ex. 3 | Light Guide Plate/ Low Refractive Index Layer/ Pressure-Sensitive Adhesive Layer/ Substrate Layer | 1.0 | × | × | × |
| Comparative Ex. 4 | Light Guide Plate/ Low Refractive Index Layer/ Pressure-Sensitive Adhesive Layer/ Substrate Layer | 1.4 | × | × | × |

While the illustrative embodiments of the present invention are provided in the above description, such is for illustrative purpose only and it is not to be construed as limiting the scope of the present invention. Modification and variation of the present invention that will be obvious to those skilled in the art is to be covered by the following claims.

INDUSTRIAL APPLICATION

The AR device of the present invention is, for example, used for AR glass and a head-mounted display corresponding to an AR technology.

Description of Reference Numerals

1    Laminate

2    Light guide plate

3    Low refractive index layer

10    AR device

**Claims**

1. An AR device comprising:

     a laminate having a light guide plate and
     a low refractive index layer disposed on at least one side in a thickness direction of the light guide plate, wherein
     a refractive index of the low refractive index layer is 1.25 or less, and
     a thickness of the low refractive index layer is 1.5 μm or more and 10 μm or less.

2. The AR device according to claim 1, wherein
   a standard deviation in a thickness of the low refractive index layer is 10% or less.

3. The AR device according to claim 1, wherein
   a thickness of the light guide plate is 0.3 mm or more and 5 mm or less.

4. The AR device according to claim 1 comprising the laminate further having a pressure-sensitive adhesive layer disposed on at least one side in the thickness direction of the light guide plate.

5. The AR device according to any one of claims 1 to 4 comprising the laminate further having a substrate layer disposed on at least one side in the thickness direction of the light guide plate.

6. The AR device according to claim 1, wherein

     in a color unevenness evaluation test described below, color unevenness is not visually confirmed on the surface of the laminate when observed from a 0° position on one side in the thickness direction of the laminate.
     [Color Unevenness Evaluation Test]
     The laminate of 100 mm× 100 mm is set so as to be flat and is visually observed from the 0° position (position perpendicular to a plane direction at a central portion of the laminate) on one side in the thickness direction of the laminate, and further, a picture thereof is photographed from the same position. A presence or absence of the color unevenness is evaluated by visual observation and confirmation of the photographed picture.

FIG. 1

10

FIG. 2

1

Thickness direction

Plane direction

FIG. 3A

Thickness direction

Plane direction

FIG. 3B

FIG. 3C

FIG. 3D

FIG. 4

3
2
3

1

Thickness direction

Plane direction

FIG. 5

3
5
4
2
4
5
3

1

Thickness direction

Plane direction

**EP 4 697 082 A1**

## INTERNATIONAL SEARCH REPORT

International application No.

**PCT/JP2024/008520**

| A. CLASSIFICATION OF SUBJECT MATTER |
|---|
| *G02B 27/02*(2006.01)i; *B32B 7/023*(2019.01)i; *G02B 1/111*(2015.01)i<br>FI:  G02B27/02 Z; B32B7/023; G02B1/111 |

According to International Patent Classification (IPC) or to both national classification and IPC

| B. FIELDS SEARCHED |
|---|

Minimum documentation searched (classification system followed by classification symbols)

G02B27/01-27/02; B32B7/023; G02B1/111; H04N5/64

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| C. DOCUMENTS CONSIDERED TO BE RELEVANT |
|---|

| Category* | Citation of document, with indication, where appropriate, of the relevant passages | Relevant to claim No. |
|---|---|---|
| A | JP 2018-503865 A (LUMUS LTD.) 08 February 2018 (2018-02-08)<br>entire text, all drawings | 1-6 |
| A | US 2022/0214548 A1 (FACEBOOK TECHNOLOGIES, LLC) 07 July 2022 (2022-07-07)<br>entire text, all drawings | 1-6 |
| A | JP 2006-162767 A (NIKON CORPORATION) 22 June 2006 (2006-06-22)<br>entire text, all drawings | 1-6 |
| A | JP 2022-519477 A (OORYM OPTICS LTD.) 24 March 2022 (2022-03-24)<br>entire text, all drawings | 1-6 |
| A | JP 2019-101142 A (TORAY INDUSTRIES, INC.) 24 June 2019 (2019-06-24)<br>entire text, all drawings | 1-6 |
| A | WO 2022/025067 A1 (NITTO DENKO CORPORATION) 03 February 2022 (2022-02-03)<br>entire text, all drawings | 1-6 |

☑ Further documents are listed in the continuation of Box C.   ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **15 April 2024** | **23 April 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

22

**INTERNATIONAL SEARCH REPORT**

| International application No. |
| --- |
| **PCT/JP2024/008520** |

**C. DOCUMENTS CONSIDERED TO BE RELEVANT**

| Category* | Citation of document, with indication, where appropriate, of the relevant passages | Relevant to claim No. |
| --- | --- | --- |
| A | JP 2021-504760 A (LG CHEM, LTD.) 15 February 2021 (2021-02-15)<br>entire text, all drawings | 1-6 |
| A | JP 2021-508080 A (DISPELIX OY) 25 February 2021 (2021-02-25)<br>entire text, all drawings | 1-6 |
| A | JP 2015-171815 A (TORAY INDUSTRIES, INC.) 01 October 2015 (2015-10-01)<br>entire text, all drawings | 1-6 |
| P, X | JP 2023-126175 A (NITTO DENKO CORPORATION) 07 September 2023 (2023-09-07)<br>claims 1-11, paragraphs [0008]-[0078], fig. 1-3 | 1, 3-5 |
| P, A | claims 1-11, paragraphs [0008]-[0078], fig. 1-3 | 2, 6 |

Form PCT/ISA/210 (second sheet) (July 2022)

## INTERNATIONAL SEARCH REPORT
### Information on patent family members

International application No.

**PCT/JP2024/008520**

| Patent document cited in search report | | | Publication date (day/month/year) | Patent family member(s) | | | Publication date (day/month/year) |
|---|---|---|---|---|---|---|---|
| JP | 2018-503865 | A | 08 February 2018 | US | 2018/0067315 | A1 | |
| | | | | entire text, all drawings | | | |
| | | | | WO | 2016/103251 | A1 | |
| | | | | EP | 3237954 | A1 | |
| | | | | CN | 107111129 | A | |
| | | | | KR | 10-2020-0021001 | A | |
| US | 2022/0214548 | A1 | 07 July 2022 | WO | 2022/147547 | A1 | |
| | | | | TW | 202244565 | A | |
| JP | 2006-162767 | A | 22 June 2006 | US | 2007/0070859 | A1 | |
| | | | | entire text, all drawings | | | |
| | | | | WO | 2005/111669 | A1 | |
| | | | | EP | 1748305 | A1 | |
| JP | 2022-519477 | A | 24 March 2022 | US | 2022/0107499 | A1 | |
| | | | | entire text, all drawings | | | |
| | | | | WO | 2020/157747 | A1 | |
| | | | | EP | 3918406 | A1 | |
| | | | | KR | 10-2021-0119996 | A | |
| | | | | CN | 113678049 | A | |
| JP | 2019-101142 | A | 24 June 2019 | (Family: none) | | | |
| WO | 2022/025067 | A1 | 03 February 2022 | US | 2023/0280523 | A1 | |
| | | | | entire text, all drawings | | | |
| | | | | EP | 4191132 | A1 | |
| | | | | KR | 10-2023-0035069 | A | |
| | | | | CN | 116134268 | A | |
| | | | | TW | 202213807 | A | |
| JP | 2021-504760 | A | 15 February 2021 | US | 2020/0355932 | A1 | |
| | | | | entire text, all drawings | | | |
| | | | | WO | 2019/117588 | A1 | |
| | | | | EP | 3712683 | A4 | |
| | | | | KR | 10-2019-0072435 | A | |
| | | | | CN | 111448501 | A | |
| JP | 2021-508080 | A | 25 February 2021 | US | 2020/0379259 | A1 | |
| | | | | entire text, all drawings | | | |
| | | | | WO | 2019/122502 | A1 | |
| | | | | EP | 3710882 | A4 | |
| | | | | CN | 111492299 | A | |
| | | | | KR | 10-2020-0104324 | A | |
| JP | 2015-171815 | A | 01 October 2015 | (Family: none) | | | |
| JP | 2023-126175 | A | 07 September 2023 | WO | 2023/163185 | A1 | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2011221129 A
- JP 2001188104 A
- WO 4140736 A